# FASCICULE DE BREVET EUROPEEN

(11) **EP 0 579 961 B1**
(45) Date de publication et mention de la délivrance du brevet: **14.08.1996**
(21) Numéro de dépôt: 93109859.4
(22) Date de dépôt: 21.06.1993
(51) Int. Cl.: G01B 5/06, G01B 5/00

(54) **Appareil de mesure de grandeurs linéaires**
Messapparat zur Messung linearer Grössen
Measuring apparatus for measuring linear dimensions

(30) Priorité: 16.07.1992 CH 2248/92
(43) Date de publication de la demande: 26.01.1994
(73) Titulaire: Tesa Brown & Sharpe S.A., 1020 Renens (CH)
(72) Inventeur: Bezinge, Alex, CH-1137 Yens (CH); Birkner, Ulf, CH-1052 Le Mont s/Lausanne (CH); Orita, Adrian, CH-1020 Renens (CH); Zanier, Adriano, CH-1008 Prilly (CH); Zufferey, Charles, CH-1003 Lausanne (CH)
(74) Mandataire: BOVARD AG - Patentanwälte

(56) Documents cités:
- EP-A- 0 298 262
- EP-A- 0 421 922
- WO-A-88/02471
- FR-A- 2 442 429
- FR-A- 2 595 812

## Description

La présente invention a pour objet un appareil de mesure de grandeurs linéaires comprenant un bâti, une coulisse de guidage fixée rigidement au bâti et orientée parallèlement à une direction de mesure, un coulisseau avec des moyens pour coulisser le long de la coulisse, une tête de mesure avec touche de palpage associée au coulisseau, un dispositif de détection de la position de la touche de palpage le long de la coulisse de guidage, au moins un générateur de mouvements avec une transmission pour déplacer le coulisseau le long de la coulisse, un boîtier et un dispositif de protection pour protéger au moins la tête de mesure contre les chocs et contre les contraintes provoquées par l'actionnement du générateur de mouvements et par sa transmission.

Des appareils de mesure de grandeurs linéaires comprenant de tels éléments sont utilisés dans les ateliers de fabrication de pièces mécaniques pour la mesure et le contrôle des dimensions de celles-ci.

Ces éléments sont généralement associés à une table plane horizontale ou banc de mesure sur lequel la pièce à mesurer ou à contrôler est maintenue immobile dans une position choisie de telle sorte que ce banc constitue un plan de référence pour les mesures de hauteurs et les mesures d'alésages à axes de résolution parallèles audit plan.

Selon le type d'appareil, celui-ci comporte ou bien trois coulisses orientées parallèlement à trois axes de coordonnées rectangulaires dont deux sont inscrits dans le plan du banc de mesure, comme sur les appareils de mesures tridimensionnelles, ou bien une seule coulisse orientée perpendiculairement au plan du banc de mesure, comme sur les appareils de mesure de hauteurs et d'alésages.

Sur les appareils de mesures tridimensionnelles, la coulisse à laquelle sont associés les éléments précités est généralement fixée à un système de guidage destiné à la déplacer dans deux directions parallèles aux deux autres axes de coordonnées et comprenant des moyens de détection de sa position le long de ces deux axes, ce système de guidage étant porté par un bâti rigide relié au banc de mesure.

Sur les appareils de mesure de hauteurs, la coulisse est fixée sur une colonne rigide comportant une semelle d'appui déplaçable par glissement sur le banc de mesure.

Il existe également des appareils de mesure de longueurs comprenant les éléments de mesure précités dans lesquels la coulisse est solidaire d'un banc de mesure ou d'étalonnage horizontal et qui sont utilisés notamment pour le contrôle et l'étalonnage de pièces de grande longueur.

De par l'inertie des éléments déplacés pendant les opérations de prise de mesure, qui concourent à mettre la touche de palpage en contact avec la pièce à mesurer, et de par la sensibilité aux chocs et aux contraintes des éléments de la tête de mesure, des risques de rupture, de déformations ou de dérèglement du système de mesure sont toujours à craindre.

C'est pourquoi, sur ces appareils, la tête de mesure est toujours recouverte au moins partiellement par un boîtier de protection et que par ailleurs d'autres protections sont également prévues, notamment par des liaisons d'équilibrage, élastiques ou autres, établies entre la tête de mesure et le coulisseau, dans la direction de mesure.

Ainsi par exemple, sur un appareil de mesure de hauteurs décrit dans le document EP 0223736, la tête de mesure portant la touche de palpage est montée mobile dans la direction de mesure et relativement par rapport au coulisseau, et maintenue en équilibre par le moyen d'un contrepoids à l'intérieur de ce dernier dans une position correspondant au zéro de mesure par un positionneur à enclenchement élastique. Sur cet appareil le boîtier de protection de la tête de mesure fait corps avec le coulisseau et le dispositif utilisé pour déplacer ce dernier lui est solidaire. Le sytème d'équilibrage par contrepoids de la tête de mesure à l'intérieur du coulisseau permet de soustraire celle-ci aux mauvais effets des oscillations générées par l'actionnement du dispositif de déplacement solidaire dudit coulisseau.

Dans un autre appareil de mesure de hauteurs, décrit dans le document CH 667726, la tête de mesure portant la touche de palpage est montée mobile dans la direction de mesure sur le coulisseau et maintenue en équilibre sur celui-ci et dans cette direction par les forces antagonistes de deux ressorts de compression, placés en opposition de part et d'autre de ce coulisseau, qui sont aussi utilisés pour appliquer une force de palpage prédéterminée par la touche de palpage sur la pièce à mesurer, lors du processus de prise de mesure, cette force de palpage étant contrôlée par un dispositif de détection du déplacement relatif de la tête de mesure par rapport au coulisseau. Sur cet appareil le boîtier de protection de la tête de mesure est fixé sur le coulisseau et celui-ci est déplacé le long de la coulisse par la courroie d'un système de transmission de mouvements du type à poulies et courroie sans fin actionné par une commande placée sur une colonne portant la coulisse.

Dans un autre appareil de mesure de hauteurs, décrit dans le document EP 0421922, le coulisseau se compose d'un premier coulisseau partiel de déplacement, relié a une courroie de transmission de mouvements actionnée par une commande placée sur une colonne portant la coulisse, et d'un second coulisseau partiel de mesure portant la tête de palpage, relié au premier coulisseau par une liaison à ressorts comprenant un ressort de traction d'équilibrage et deux ressorts de compression mis en opposition pour appliquer ici également une force de palpage déterminée contrôlée par un capteur de déplacement, ces deux coulisseaux partiels étant montés coulissants, l'un à la suite de l'autre, sur la coulisse.

Sur ces appareils de mesure de hauteurs, la combinaison des moyens de protection de la tête de mesure, boîtier et/ou équilibrage dans la direction de mesure, sont satisfaisants. Ils permettent de parer dans une certaine mesure aux aléas habituels des déplacements de la colonne sur le banc de mesure nécessités par la mise en contact de la touche de palpage avec la pièce à mesurer et qui peuvent occasionner des rencontres plus ou moins brutales entre celle-ci et la tête de mesure; ils permettent également d'amortir les oscillations générées par le dispositif de déplacement du coulisseau le long de la coulisse.

L'invention a pour but de soustraire encore davantage la tête de mesure portant la touche de palpage aux mauvais effets des chocs et contraintes induits par les opérations de mise en contact de la touche de palpage avec la pièce à mesurer.

A cet effet l'appareil selon l'invention, du genre défini en début d'exposé, est caractérisé en ce qu'il comporte un plateau d'entraînement relié à la transmission de mouvements, des moyens de guidage indépendants de la coulisse pour stabiliser le plateau d'entraînement par rapport à celle-ci, des moyens de liaison d'équilibrage et d'amortissement entre le plateau d'entraînement et le coulisseau, et une poutre indépendante de la coulisse, fixée rigidement au bâti pour supporter à elle seule ou avec ce dernier le boîtier, le générateur et la transmission de mouvements.

De la sorte, non seulement le coulisseau portant la tête de mesure mais également la coulisse qui le guide sont désolidarisés des éléments précités - boîtier, générateur et transmission de mouvements - susceptibles de leur transmettre des chocs et oscillations, ces phénomènes étant largement amortis, avant de les atteindre, par la masse du bâti et de la poutre qui supportent ces éléments.

Des particularités de formes et d'agencement des éléments qui caractérisent l'invention, qui ressortent de la description qui suit, apportent des avantages supplémentaires dans le cadre du but recherché de protéger au mieux les éléments sensibles de l'appareil contre tout phénomène nuisible ou perturbateur.

Le dessin annexé représente, à titre d'exemple, une forme d'exécution de l'objet de l'invention, ainsi qu'une variante d'un détail.

La figure 1 en est une vue de profil en coupe partielle.

La figure 2 en est une vue de face, en coupe partielle également.

La figure 3 en est une vue en plan - coupe partielle, selon l'axe de coupe I-I de la figure 1.

La figure 4 en est une vue en plan - coupe partielle, selon l'axe de coupe II-II de la figure 2.

La figure 5 est une vue détaillée de dessus en coupe partielle d'un dispositif associé à un élément de cette forme d'exécution.

La figure 6 est une coupe partielle selon l'axe de coupe III-III de la figure 5.

La figure 7 est une vue détaillée de dessus en coupe partielle d'une variante du dispositif représenté figures 5 et 6.

La figure 8 est une vue de profil de la variante, selon la flèche f de la figure 7.

L'appareil de mesure représenté est du type des colonnes autonomes de mesure de hauteurs présentant un bâti 1, dit semelle d'appui plane, déplaçable par glissement sur une table plane de référence horizontale, non représentée, sur laquelle est posée ou fixée une pièce à mesurer selon un processus connu tel que celui décrit par exemple dans le document CH 667726 cité précédemment.

Sur la semelle d'appui 1 sont implantés rigidement une coulisse de guidage 2 et une poutre 3, parallèles entre elles, indépendantes l'une de l'autre et perpendiculaires au plan d'appui de la semelle 1, la poutre 3 étant située derrière la coulisse 2 par rapport à la face frontale active de l'appareil.

Un coulisseau 4, portant une tête de mesure 5, est monté mobile par translation le long de la coulisse 2 par le moyen de trains de galets 6 enserrant celle-ci sur ses quatre faces de guidage, dans l'exemple décrit, par groupes de trois sur ses quatre angles.

Un dispositif de rattrapage de jeu fonctionnant par application d'une précontrainte élastique de pression constante des galets 6 sur les faces de guidage de la coulisse 2, permet de rattraper ce jeu de manière automatique.

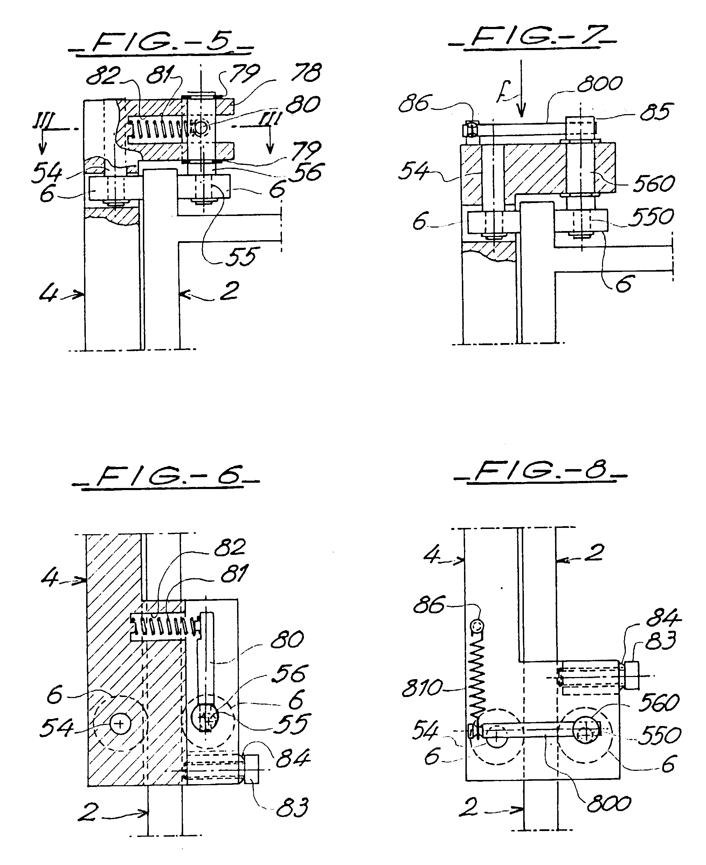

Ce dispositif, représenté figures 5 et 6 comprend, pour chaque paire de galets 6 enserrant deux faces opposées et parallèles de la coulisse 2, un premier galet 6 monté rotatif sur un premier arbre 54 fixé rigidement au coulisseau 4 et un second galet 6 monté rotatif sur une extrémité excentrée d'un second arbre 56 monté lui-même rotatif au travers de deux bras d'une fourche 78 portée par le coulisseau 4. L'arbre 56 est immobilisé axialement par deux circlips 79 placés de part et d'autre de la fourche 78 et comporte un timon 80 passant entre les deux bras de cette fourche. Le timon 80 est soumis par son extrémité libre à la poussée d'un ressort de compression 81 logé dans un trou débouchant 82 du coulisseau 4. Le positionnement angulaire du timon 80 par rapport à celui de la partie excentrée 55 de l'arbre 56 est prévu de telle sorte qu'une force de pression sur la coulisse 2 est transmise au galet 6, cette force de pression étant fonction de la poussée développée par le ressort 81 et du rapport entre l'excentricité de cet arbre 56 et le bras de levier du timon 80.

Une butée à vis réglable 83, visible seulement sur la figure 6, dont l'axe est perpendiculaire à la face de la coulisse 2 sur laquelle est pressé un galet 6 subissant la force de pression précitée est placée en prise dans un trou fileté correspondant du coulisseau 4 et est freinée en rotation par une rondelle élastique 84.

Ce dispositif de rattrapage de jeu a action douce et constante, qui garantit un guidage rectiligne quasi parfait sous les contraintes d'utilisation normales, permet par sa réponse élastique instantanée de protéger les galets de guidage 6 contre les mauvais effets d'accélérations brutales telles que par exemple celles développées lors d'avance par vitesse brusque et élevée, d'inversion trop rapide de sens de marche ou de traction directe sur le coulisseau.

La butée à vis 83 permet de régler et de limiter le jeu de rattrapage élastique dans le but d'avoir seulement la pression nécessaire au fonctionnement normal prévu sans trop charger les galets. Cette butée à vis 83 joue ainsi également le rôle de limiteur de décollement extrême lorsque les galets 6 sont soumis aux effets précités d'accélérations brutales.

Mais il est cependant évident que cette butée à vis 83 n'est pas indispensable sur un appareil de faible masse de ses organes mobiles et de fort dimensionnement des galets 6 et de leurs arbres.

Le dispositif de rattrapage de jeu tel que décrit, malgré les avantages précités relatifs aux protections de l'appareil contre les chocs et contraintes exceptionnelles, n'est pas indispensable. Tout autre système de guidage rectiligne de précision peut être également appliqué sans sortir du cadre de l'invention.

Un plateau d'entraînement 7, en forme de cadre, est placé en avant du coulisseau 4, superposé en position parallèle à ce dernier; il est stabilisé dans cette position sans frottement par trois galets 8 pris avec jeu dans trois portions de rails 9 en U solidaires du coulisseau 4, et est relié à ce dernier, dans la direction de ses déplacements le long de la coulisse 2, par un train de trois ressorts de traction 10, 11 et 12 constituant une suspension flottante d'équilibrage et d'amortissement entre ces deux éléments et dont les fonctions sont définies plus loin.

Le plateau d'entraînement 7 est relié par ses deux extrémités haute et basse à un câble 13 formant avec un contrepoids 14 un circuit fermé et constituant une transmission de mouvements guidée par quatre poulies de renvoi 15, 16, 17 et 18 dont l'une 15 est montée sur l'arbre de sortie 28 d'un générateur de mouvements 19. L'entraînement se fait par friction du câble 13 sur la poulie motrice 15.

Le brin du câble 13 relié au contrepoids 14 passe avec ce dernier a l'intérieur de la coulisse de guidage 2, sans toucher les parois de celle-ci. Les poulies haute et basse 15 et 18 de ce brin sont portées, la première en bas par deux paliers 20 et 21 fixés à la semelle d'appui 1 de part et d'autre de la coulisse 2, et la seconde, en haut, par une chape 22 à tendeur à ressort 23 supportée par une console 24 fixée en bout de la poutre 3.

Les deux autres poulies 16 et 17 du brin du câble 13 relié au plateau d'entraînement 7 sont portées, la première en bas par deux paliers 25 fixés dans une cavité 26 de la semelle d'appui 1 et la seconde, en haut, par une chape 27 fixée à la console 24.

L'axe 28 de la poulie motrice 15 passe au travers de deux trous 29 et 30 des parois opposées latérales de la coulisse 2 et l'un de ces deux trous, le trou 21 situé du côté du générateur de mouvements 19, est d'un diamètre supérieur à celui de cette poulie 15 pour faciliter son montage. De son côté, le générateur de mouvements 19 est entièrement supporté par le palier 21 dans lequel est engagé son propre palier de sortie 31.

Par cet agencement du système de transmission par câble 13 dans lequel la charge des poulies de renvoi 15 à 18 est supportée uniquement par la semelle d'appui 1 et la poutre 3, la coulisse 2 de guidage du coulisseau 4 se trouve totalement isolée des oscillations générées par le dispositif de déplacement du plateau d'entraînement 7, le générateur de mouvements 19 se trouvant par ailleurs supporté par la semelle d'appui 1.

Le ressort central 10 du train de ressorts de traction 10, 11 et 12 est tendu de manière réglable entre une console 32 fixée à la traverse supérieure 33 du plateau d'entraînement 7 et une chape 34 fixée à une traverse 35 du coulisseau 4 pour équilibrer le poids propre de ce dernier entièrement équipé de sa tête de mesure 5 et d'une touche de palpage, non représentée, fixée en bout de celle-ci.

De son côté, le contrepoids 14 est prévu pour équilibrer la totalité des masses suspendues, c'est-à-dire de l'ensemble précité du coulisseau, de la tête de mesure et de la touche de palpage, augmenté du poids propre du plateau d'entraînement 7.

Les deux ressorts latéraux 11 et 12 du train de ressorts de traction 10, 11 et 12 sont installés en positions parallèles mais en opposition de manière à pouvoir développer dans un sens comme dans l'autre une pression de mesure a partir d'une position neutre correspondant à l'équilibre des deux éléments qu'ils relient obtenu par le moyen du ressort central 10 précité.

Chacun de ces deux ressorts 11 et 12 est fixé par une extrémité à une console 36 fixée sur le coulisseau 4 et par l'autre extrémité à une biellette 37 présentant une coulisse 38 de limitation de course dans laquelle est engagée une seconde console 39 fixée au plateau d'entraînement 7, cette biellette 37 étant guidée en translation par un palier intermédiaire 40 fixé au coulisseau 4.

Cet emploi de deux ressorts en opposition pour obtenir une pression de mesure applicable par la touche de palpage sur la pièce à mesurer fait habituellement appel à deux ressorts de compression mis directement en opposition de part et d'autre d'un bras solidaire de l'un des deux éléments qu'ils relient. Ici, l'emploi de deux ressorts de traction mis en opposition en positions parallèles permet d'éviter tout frottement inhérent au guidage axial qui serait indispensable en cas d'emploi de ressorts de compression.

Afin de parer à toute action brutale de mise en contact de la touche de palpage avec la pièce à mesurer, dans les sens du déplacement en hauteur du coulisseau 4 par le plateau d'entraînement 7, et qui aurait pour effet de dépasser la course relative prévue de ce dernier par rapport au coulisseau, deux dispositifs de butées à double action sont adjoints, également en opposition d'action pour fonctionner dans les deux sens.

Ces deux dispositifs sont composés, pour chacun d'eux, d'une console 41 fixée a la partie supérieure de l'un des deux éléments mobiles relativement, coulisseau ou plateau d'entraînement, et par une butée 42 à ressort de compression coaxial 43 fixée à l'autre élément et placée sous la console 41 de telle sorte qu'en un premier temps de déplacement correspondant à la course limite admise, le ressort 43 est seul sollicité. Passé cette course limite la console 41 vient en appui sur la butée 42 et c'est alors le câble 13 du dispositif d'entraînement qui absorbe la contrainte excédentaire par friction sur la poulie motrice 15, sans solliciter le coulisseau 4 ni la coulisse 2.

Cette sécurité supplémentaire n'est pas indispensable mais elle peut être obtenue et appliquée ici avantageusement grâce au principe de l'invention.

Un dispositif de blocage indirect 48 est prévu ici pour immobiliser le coulisseau 4 par rapport au plateau d'entraînement 7 pour le cas d'utilisation de l'appareil pour une mesure de perpendicularité avec un palpeur de mesure supplémentaire, pour la mesure avec des palpeurs auxiliaires, ou encore pour une utilisation en fonction de trusquin.

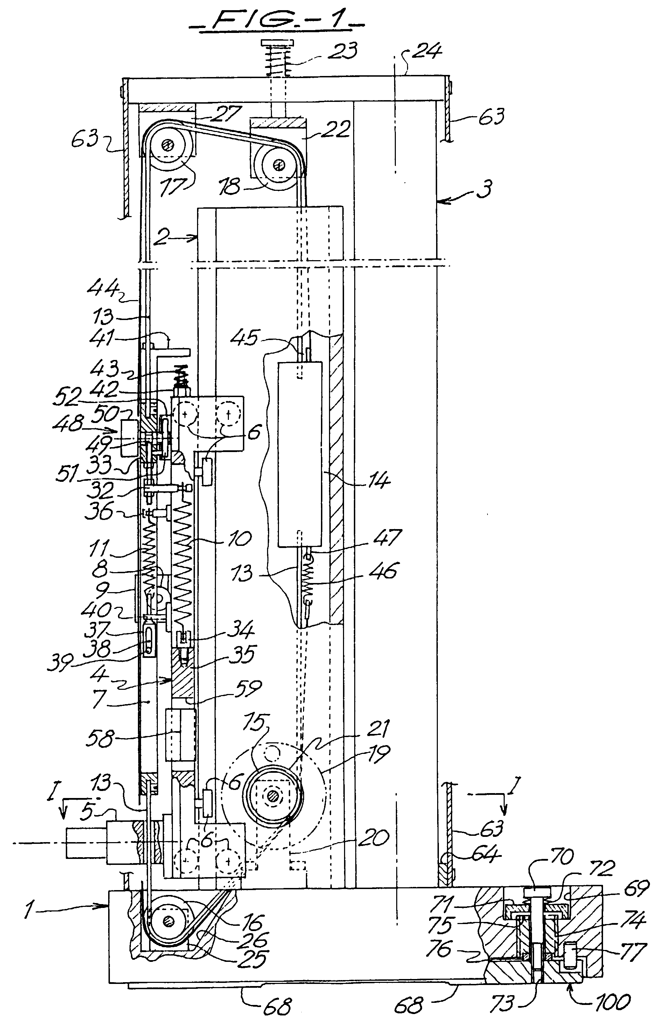

Ce dispositif de blocage, détaillé sur la figure 1, est composé d'une vis 49 à bouton d'entraînement manuel 50, à retenue axiale dans le plateau d'entraînement 7, déplaçant en translation un écrou 51 à retenue radiale pour immobiliser par serrage contre le plateau d'entraînement 7 une lame 52 fixée au coulisseau 4.

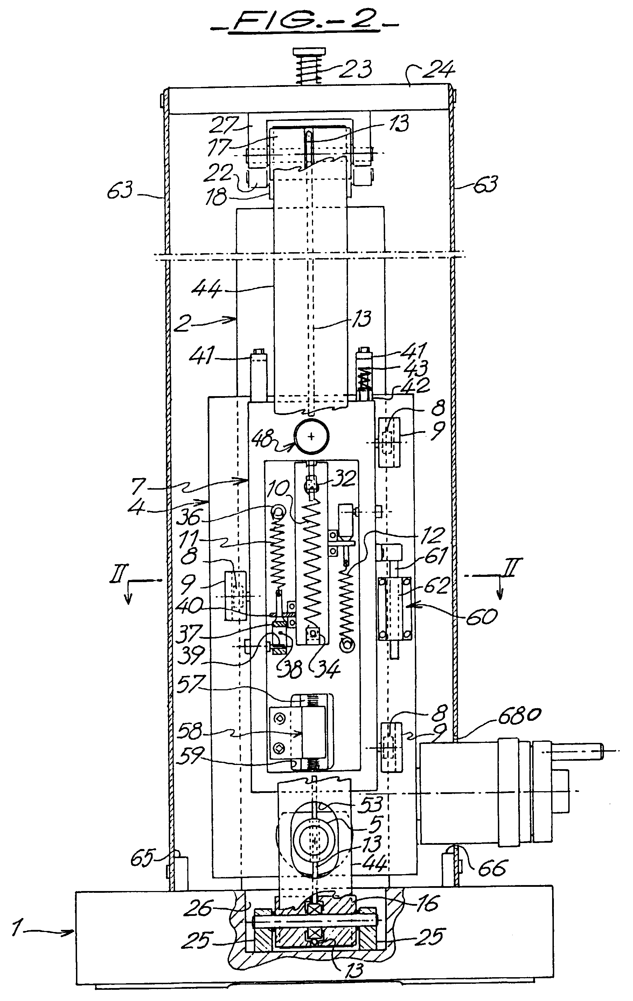

Le circuit du câble 13 et le plateau d'entraînement 7 auquel il est relié est ici recouvert d'une bande de protection souple 44, constituée par exemple par un tissu de fibre de verre plastifié, guidé également par les quatre poulies 15 à 18 et fixé par une extrémité à un tenon 45 solidaire de la face supérieure du contrepoids 14 et par l'autre extrémité à un ressort de tension 46 retenu par un second tenon 47 solidaire de la face inférieure de ce contrepoids. Les poulies de guidage 15 à 18 sont réalisées à deux étages : une partie centrale de plus petit diamètre pour le guidage du câble 13 et deux parties latérales formant une poulie bombée pour le guidage de la bande de protection 44, la partie centrale étant désolidarisée des deux parties latérales, comme cela est représenté détaillé pour la poulie 16 au bas de la figure 2, sauf toutefois en ce qui concerne la poulie motrice 15 dans laquelle ces trois parties sont solidaires et fixées à l'axe 28 du générateur de mouvements 19.

Au niveau de la tête de mesure 5 et à celui du bouton 50 du dispositif de blocage 48, la bande 44 présente une ouverture élonguée dans le sens de son déplacement pour permettre les différences de déplacement entre elle et le câble 13, seule son ouverture au niveau de la tête de mesure 5, repérée 53, étant visible sur la figure 2.

Le plateau d'entraînement 7 et le coulisseau 4 peuvent comporter un dispositif de stabilisation de leur position relative d'équilibre; ce dispositif, non représenté, peut être constitué par exemple par un frein magnétique.

En ce qui concerne les moyens de mesure de l'appareil, celui-ci comporte une règle graduée 57, par exemple en verre à divisions contrastées, un premier capteur de position 58, par exemple opto-électronique, placé en regard de la règle 57 au travers d'une ouverture 59 du coulisseau 4 et dont le boîtier est fixé à ce dernier, et un second capteur 60, dont le curseur 61 est fixé au plateau d'entraînement 7 et dont le corps 62 comportant la piste sensible est fixé au coulisseau 4. Le premier capteur 58 fournit un signal électrique représentatif de la position effective de la touche de palpage par rapport au plan d'appui de la semelle 1 et le second capteur 60 fournit un signal de déplacement relatif entre le coulisseau 4 et le plateau d'entraînement 7 représentatif de la force de palpage appliquée dans un sens ou dans l'autre de ce déplacement. Ces signaux sont transmis par un câble, non représenté, relié à un pupitre de contrôle, non représenté également, comportant notamment un affichage des valeurs représentées par ces signaux.

En ce qui concerne le boîtier de protection, celui-ci est ici constitué par une carrosserie 63 en tôle, entourant l'ensemble des éléments de l'appareil hormis sa semelle 1, fixé par sa partie haute à la périphérie de la console 24 chapeautant la poutre 3 et par sa partie basse à trois tenons 64, 65 et 66 implantés sur la semelle d'appui 1, sans aucun contact de ce fait avec la coulisse 2, le plateau d'entraînement 7, le coulisseau 4 et les éléments sensibles qu'ils portent.

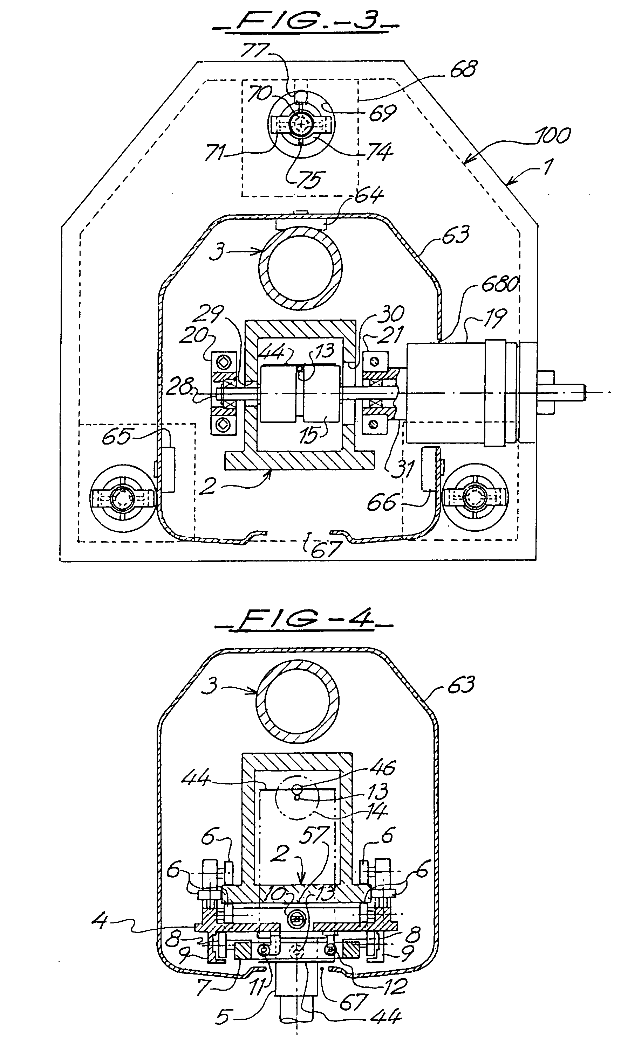

Cette carrosserie 63, visible en coupe transversale sur les figures 3 et 4, comporte une ouverture verticale 67, de largeur supérieure à celle de la tête de mesure 5 et étendue le long de la course de celle-ci et du bouton 50 du dispositif de blocage 48. Cette ouverture 67 est par ailleurs obturée à la manière d'un rideau par le ruban 44 situé entre celle-ci et le plateau d'entraînement 7, comme il ressort clairement de la figure 4. Du côté du générateur de mouvements 19 cette carrosserie comporte également une ouverture circulaire 680 de libre passage.

La protection est donc ici quasi totale, à la fois contre les chocs et contre les pollutions.

La semelle 1 présente ici la particularité de comporter une contre-semelle d'appui 100, engagée dans sa face inférieure, à trois facettes d'appui planes espacées 68 formant un polygone de sustentation triangulaire, qui lui est reliée au-dessus de ces trois facettes 68 par trois dispositifs de liaisons d'appui réglables en hauteur à précontrainte contrôlée et constante. Chacun de ces trois dispositifs comporte à cet effet, engagée dans un chambrage 69 de la face supérieure de la semelle 1, une vis centrale 70 mise en appui sur une traverse 71 appuyée sur le fond dudit chambrage par l'intermédiaire de rondelles élastiques 72, et dont la partie filetée est en prise dans un trou fileté 73 de la contre-semelle 100.

La vis 70 passe librement au travers d'un bouchon fileté concentrique 74 en prise dans un trou fileté correspondant de la semelle 1 et comportant une prise en croix 75 sur sa face supérieure, sous la traverse 71.

Entre le bouchon fileté 74 et la contre-semelle 100 est intercalée une rondelle-entretoise 76; celle-ci n'est toutefois pas indispensable.

Dans chacun de ces trois dispositifs ainsi constitués, la vis centrale 70 et les rondelles élastiques 72 permettent d'appliquer une force de serrage constante de la contre-semelle 100 contre le bouchon fileté 74 et de rattraper le jeu fonctionnel entre ce dernier et la semelle 1, et ce bouchon fileté 74 permet un réglage fin de la perpendicularité de cette contre-semelle 100 par rapport aux faces de guidage de la coulisse 2.

Des goupilles 77 de positionnement de la contre-semelle 100 par rapport à la semelle 1 sont prévues pour éviter tout déplacement relatif entre ces deux éléments.

Ces dispositifs de liaison ne sont pas indispensables au vu du but de l'invention mais apportent cependant l'avantage d'éviter toute trépidation entre la semelle et sa contre-semelle.

Bien entendu, l'appareil décrit n'est pas limitatif en ce qui concerne les modes d'application du principe de l'invention.

Par exemple, dans l'application de l'invention à un banc de mesure horizontal, il est évident que le ressort central 10 d'équilibrage du poids propre du coulisseau 4 est inutile, de même que le contrepoids 14.

La tête de mesure 5 peut être montée mobile dans la direction perpendiculaire à la direction de mesure dans un dispositif de détermination automatique du point de rebroussement du palpeur lors du processus de mesure d'un alésage ou d'un arbre, comme par exemple le dispositif décrit dans le document CH 667726 déjà cité.

La bande souple de protection 44 n'est pas indispensable et peut être supprimée dans une réalisation économique permettant de simplifier la transmission par remplacement des poulies à étage 15-18 par des poulies à gorge simple. Cependant, cette bande 44 apporte un avantage supplémentaire dans les moyens de protection des organes sensibles de l'appareil contre la pollution des agents extérieurs tels que les poussières et les éventuelles projections de liquides gras d'un atelier de fabrication de pièces mécaniques.

Le dispositif 48 de blocage de la position du coulisseau 4 sous le plateau d'entraînement 7 n'est pas non plus indispensable et peut être supprimé sur un appareil qui n'est pas destiné à être utilisé avec des palpeurs complémentaires ou en trusquin.

La position superposée du plateau d'entraînement 7 en avant du coulisseau 4 n'est pas non plus limitative et il n'est pas impensable d'insérer ledit plateau à l'intérieur d'un boîtier de guidage solidaire du coulisseau 4, comme par exemple dans le document GB 1108792, sans sortir du cadre de l'invention, à la condition toutefois de faire supporter toutes les contraintes de la transmission de mouvements par la poutre 3 et/ou la semelle 1.

L'emploi de ressorts de traction 10, 11 et 12 est ici également avantageux non seulement par la suppression de frottements déjà mentionnée, mais également par le choix qu'il permet d'un système de stabilisation de position simple et exempt de frottements du plateau d'entraînement 7 sur le coulisseau 4, a l'aide de trois galets 8 engagés avec jeu dans trois tronçons de rails 9.

Mais l'emploi habituel de ressorts de compression n'est pas exclu moyennant cependant un guidage plus élaboré du plateau d'entraînement, nécessité par les composantes transversales générées par la compression de ce type de ressorts, pour ne pas pénaliser par des frottements induits par ces composantes l'isolement du coulisseau 4.

De même, l'ensemble de stabilisation formé par les galets 8 pris dans les tronçons de rail 9 peut être remplacé par des galets à section en V roulant sur des paires de tiges fixées au coulisseau 4.

Enfin le dispositif de rattrapage de jeu des galets 6 de guidage du coulisseau 4 sur la coulisse 2, représenté par les figures 5 et 6, peut être réalisé d'une autre manière, par exemple à l'aide d'un ressort de traction, comme dans la variante de ce dispositif représentée par les figures 7 et 8.

Dans cette variante, le galet 6 pressé élastiquement sur la coulisse 2 est également monté rotatif sur une partie excentrée 550 d'un arbre 560, mais celui-ci est lui-même monté rotatif au travers de l'épaisseur d'une paroi latérale du coulisseau 4 et débouche de celui-ci par un prolongement 85 portant un timon extérieur 800.

L'extrémité libre du timon 800 subit la traction d'un ressort de traction 810 attaché à un pivot 86 fixé au coulisseau 4 de manière à ce qu'une force de pression sur la coulisse 2 soit transmise au galet 6 en question, de même manière que dans le dispositif de rattrapage de jeu déjà décrit et représenté par les figures 5 et 6. Comme dans le dispositif déjà décrit, cette variante comporte une butée à vis réglable 83, de mêmes fonctions, dont l'axe est perpendiculaire à la face de la coulisse 2 sur laquelle est pressé élastiquement le galet 6.

## Revendications

1. Appareil de mesure de grandeurs linéaires comprenant un bâti (1), une coulisse (2) de guidage fixée rigidement au bâti (1) et orientée parallèlement à une direction de mesure, un coulisseau (4) avec des moyens pour coulisser le long de la coulisse (2), une tête (5) de mesure avec touche de palpage associée au coulisseau (4), un dispositif de détection de la position de la touche de palpage le long de la coulisse de guidage, au moins un générateur (19) de mouvements avec une transmission (13,15-18) pour déplacer le coulisseau (4) le long de la coulisse (2), un boîtier (63) et un dispositif de protection pour protéger au moins la tête (5) de mesure contre les chocs et contre les contraintes provoquées par l'actionnement du générateur (19) de mouvements et par sa transmission, caractérisé en ce qu'il comporte un plateau d'entraînement (7) relié à la transmission de mouvements (13, 15-18), des moyens de guidage (8, 9) indépendants de la coulisse (2) pour stabiliser le plateau d'entraînement par rapport à celle-ci, des moyens de liaisons (10, 11, 12) d'équilibrage et d'amortissement entre le plateau d'entraînement et le coulisseau (4), et une poutre (3) indépendante de la coulisse, fixée rigidement au bâti (1), pour supporter à elle seule ou avec ce dernier le boîtier (63), le générateur (19) et la transmission de mouvements (13, 15-18).

2. Appareil selon la revendication 1, caractérisé en ce que le plateau d'entraînement (7) du coulisseau (4) est superposé à ce dernier.

3. Appareil selon la revendication 1, caractérisé en ce que les moyens de guidage du plateau d'entraînement (7) sont constitués par trois galets (8) portés par ledit plateau et engagés avec jeu dans trois tronçons de rails en U (9) fixés au coulisseau.

4. Appareil selon la revendication 1, caractérisé en ce que les moyens de liaisons entre le plateau d'entraînement (7) et le coulisseau (4) sont composés d'un premier ressort de traction (10) d'équilibrage du poids propre du coulisseau (4), et de deux seconds ressorts de traction (11, 12) parallèles entre eux et en opposition de fonction utilisés comme amortisseurs et comme générateurs d'une pression de mesure dans les deux sens du déplacement du coulisseau.

5. Appareil selon la revendication 1, caractérisé en ce que la transmission de mouvements est constituée par un câble (13) guidé en circuit fermé par des poulies de renvoi (15-18) portées par la poutre (3) et le bâti (1), fixé au plateau d'entraînement (7), incluant dans son circuit un contrepoids (14) d'équilibrage des masses suspendues, et mû par friction d'une poulie motrice (15) fixée sur un arbre (28) de sortie d'un générateur de mouvement (19) fixé au bâti (1).

6. Appareil selon la revendication 5, caractérisé en ce que le circuit du câble (13) est doublé d'une bande souple de protection (44) passant devant le plateau d'entraînement (7), le coulisseau (4) et la coulisse (2), les poulies (15-18) de guidage étant à cet effet à deux étages dont l'un de plus petit diamètre entraîne et guide le câble (13) et l'autre la bande souple (44).

7. Appareil selon la revendication 1, caractérisé en ce que le déplacement relatif entre le plateau d'entraînement (7) et le coulisseau (4) est limité par deux dispositifs de butées à double action, travaillant en opposition pour fonctionner dans les deux sens des déplacements du coulisseau et composés chacun d'une console (41) fixée à l'un des deux éléments, coulisseau ou plateau d'entraînement, et par une butée (42) à ressort de compression coaxial (43) fixée à l'autre élément et placée sous la console.

8. Appareil selon les revendications 5 et 7, caractérisé en ce que la retenue par friction du câble (13) sur la poulie motrice (15) est prévue pour céder dans le cas d'un dépassement du déplacement du coulisseau (4) limité par les deux dispositifs de butée à double action (41, 42, 43).

9. Appareil selon la revendication 1, caractérisé en ce que le bâti (1) comporte une contre-semelle d'appui (100) intégrée qui lui est reliée en trois zones espacées (68) formant un polygone de sustentation triangulaire par trois dispositifs de liaison d'appui réglables en hauteur à précontrainte contrôlée et constante (69-74) de rattrapage de jeu.

10. Appareil selon la revendication 1, caractérisé en ce que le coulisseau (4) est monté mobile par translation le long de la coulisse par le moyen de paires de galets (6) enserrant par chaque paire deux faces de guidage opposées et parallèles de ladite coulisse, et en ce qu'il comporte, pour chacune de ces paires de galets, un dispositif de rattrapage de jeu comprenant un premier galet monté rotatif sur un premier arbre (54, 540) fixé rigidement au coulisseau (4), un second galet monté rotatif sur une extrémité excentrée (55, 550) d'un second arbre (56, 560) monté lui-même rotatif dans le coulisseau, un timon (80, 800) fixé à ce second arbre et dont l'extrémité libre est soumise à l'action d'un ressort (81, 810), de telle sorte qu'une force de pression sur la coulisse (2) est transmise au galet monté rotatif sur ce second arbre.

11. Appareil selon la revendication 10, caractérisé en ce que le dispositif de rattrapage de jeu comporte une butée à vis réglable (83) dont l'axe est perpendiculaire à la face de la coulisse (2) sur laquelle est pressé élastiquement le galet monté rotatif sur le second arbre (56, 560).

12. Appareil selon la revendication 10, caractérisé en ce que le timon (80) porté par le second arbre (56) du dispositif de rattrapage de jeu est situé entre les deux bras d'une fourche (78) portée par le coulisseau (4) et est soumis par son extrémité libre à la poussée d'un ressort de compression (81) logé dans un trou débouchant (82) du coulisseau.

13. Appareil selon la revendication 10, caractérisé en ce que le timon (800) porté par le second arbre (560) du dispositif de rattrapage de jeu est extérieur au coulisseau (4) et porté par un prolongement (85) du second arbre (560), et en ce que l'extrémité libre de ce timon est soumise à la traction d'un ressort de traction (810) attaché à un pivot (86) fixé au coulisseau.

## Patentansprüche

1. Messapparat zur Messung linearer Grössen, welcher einen Ständer (1), eine starr am Ständer (1) befestigte Führungsschiene (2), die parallel zu einer Messrichtung ausgerichtet ist, einen verschiebbaren Teil (4) mit Mitteln zum Verschieben entlang der Führungsschiene (2), einen Messkopf (5) mit Messfühler, verbunden mit dem verschiebbaren Teil (4), eine Einrichtung zum Erfassen der Position des Messfühlers längs der Führungsschiene, mindestens einen Bewegungserzeuger (19) mit Übertragungsmitteln (13, 15-18) zum Verschieben des verschiebbaren Teils (4) entlang der Führungsschiene (2), ein Gehäuse (63) und eine Schutzeinrichtung umfasst, um mindestens den Messkopf (5) gegen Stösse und gegen Belastungen zu schützen, verursacht durch den Antrieb des Bewegungserzeugers (19) und seiner Uebertragungsmittel, dadurch gekennzeichnet, dass er eine Antriebsplatte (7), die mit den Bewegungsübertragungsmitteln (13, 15-18) verbunden ist, von der Führungsschiene (2) unabhängige Führungsmittel (8, 9), um die Antriebsplatte bezüglich der Führungsschiene zu stabilisieren, Verbindungsmittel (10, 11, 12) als Ausgleich und zur Dämpfung zwischen der Antriebsplatte und dem verschiebbaren Teil (4), und einen zur Führungsschiene unabhängigen Träger (3) aufweist, der fest mit dem Ständer (1) verbunden ist, um für sich selbst oder mit dem letzteren zusammen das Gehäuse (63), den Erzeuger (19) und die Bewegungsübertragungsmittel (13, 15-18) zu tragen.

2. Messapparat nach Anspruch 1, dadurch gekennzeichnet, dass die Antriebsplatte (7) des verschiebbaren Teils (4) auf den letzteren aufgesetzt ist.

3. Messapparat nach Anspruch 1, dadurch gekennzeichnet, dass die Führungsmittel der Antriebsplatte (7) durch drei Rollen (8) gebildet sind, die durch die genannte Platte gehalten sind und mit Spiel in drei Teilabschnitte eines U-Profils (9) eingreifen, das an dem verschiebbaren Teil befestigt ist.

4. Messapparat nach Anspruch 1, dadurch gekennzeichnet, dass die Verbindungsmittel zwischen der Antriebsplatte (7) und des verschiebbaren Teils (4) aus einer ersten Zugfeder (10) zum Ausgleich des Eigengewichts des verschiebbaren Teils und aus zwei zweiten Zugfedern (11, 12) zusammengesetzt sind, die zueinander parallel sind und entgegengesetzte Wirkung haben, und die als Dämpfer und als Erzeuger eines Messdruckes in den zwei Richtungen des Verschiebens des verschiebbaren Teils anwendbar sind.

5. Messapparat nach Anspruch 1, dadurch gekennzeichnet, dass die Bewegungsübertragungsmittel durch ein Kabel (13) gebildet sind, welches in einer geschlossenen Schlaufe durch Umlenkscheiben (15-18) geführt ist, die durch den Träger (3) und den Ständer (1) gehalten sind, und welches an der Antriebsplatte (7) befestigt ist, wobei es in der Schlaufe ein Gegengewicht (14) zum Ausgleich der aufgehängten Massen aufweist, und über Reibung durch eine angetriebene Scheibe bewegbar ist, die auf einer Ausgangswelle (28) eines Bewegungserzeugers (19) befestigt ist, der am Ständer (1) angeordnet ist.

6. Messapparat nach Anspruch 5, dadurch gekennzeichnet, dass die Kabelschlaufe (13) mit einem biegsamen Schutzband (44) ausgestattet ist, welches vor der Antriebsplatte (7), dem verschiebbaren Teil (4) und der Führungsschiene (2) durchläuft, wobei die Scheiben (15-18) zur Führung zu diesem Zweck zwei Etagen aufweisen, wovon die mit dem kleineren Durchmesser das Kabel (13) und die andere das biegsame Band (44) führt und antreibt.

7. Messapparat nach Anspruch 1, dadurch gekennzeichnet, dass das relative Verschieben zwischen der Antriebsplatte (7) und dem verschiebbaren Teil (4) durch zwei zweiseitig wirkende Anschlageinrichtungen begrenzt ist, die entgegengerichtet arbeiten, um in den beiden Verschieberichtungen des verschiebbaren Teils zu wirken, wobei jeder aus einer Konsole (41), die an einem der beiden Elemente verschiebbarer Teil oder Antriebsplatte befestigt ist, und durch einen Anschlag (42) mit einer koaxialen Druckfeder (43), der am anderen Element befestigt und unter der Konsole angeordnet ist, gebildet ist.

8. Messapparat nach den Ansprüchen 5 und 7, dadurch gekennzeichnet, dass das Zurückhalten des Kabels (13) durch Reibung auf der angetriebenen Scheibe vorgesehen ist, um beim Überschreiten des Verschiebens des verschiebbaren Teils (4), begrenzt durch die zwei zweiseitig wirkenden Anschlageinrichtungen, nachzugeben.

9. Messapparat nach Anspruch 1, dadurch gekennzeichnet, dass der Ständer (1) eine integrierte Gegensohlenplatte (100) umfasst, die mit ihm in drei beabstandeten Bereichen (68) verbunden ist, welche eine dreieckige Unterstützungsfläche durch drei Verbindungseinrichtungen (69-74) zum Abstützen bilden, die mit kontrollierter, konstanter und nachstellbarer Vorspannung höheneinstellbar sind.

10. Messapparat nach Anspruch 1, dadurch gekennzeichnet, dass der verschiebbare Teil (4) beweglich zum Verschieben entlang der Führungsschiene durch Paare von Rollenmittel (6) daran montiert ist, wobei durch jedes Paar zwei gegenüberliegende und parallele Führungsflächen der genannten Führungsschiene umfasst sind, und dass er für jedes dieser Rollenpaare eine Einrichtung zur Aufhebung des Spiels aufweist, die eine erste Rolle, die drehbar auf einer fest am verschiebbaren Teil (4) befestigten ersten Achse (54, 540) angebracht ist, eine zweite Rolle, die drehbar auf einem exzentrischen Ende (55, 550) einer zweiten Achse (56, 560) angebracht ist, die ihrerseits drehbar im verschiebbaren Teil gehalten ist, und einen Hebel (80, 800) umfasst, befestigt an der zweiten Achse, dessen freies Ende der Wirkung einer Feder (81, 810) ausgesetzt ist, derart, dass eine Druckkraft auf die Führungsschiene (2) auf die Rolle übertragen wird, die drehbar auf der zweiten Achse angebracht ist.

11. Messapparat nach Anspruch 10, dadurch gekennzeichnet, dass die Einrichtung zur Aufhebung des Spiels einen einstellbaren Verstellanschlag (83) mit Schraube aufweist, deren Achse senkrecht zur Fläche der Führungsschiene steht, auf welche federnd die Rolle gedrückt wird, die auf der zweiten Achse (56, 560) drehbar angebracht ist.

12. Messapparat nach Anspruch 10, dadurch gekennzeichnet, dass der Hebel (80), der durch die zweite Achse (56) der Einrichtung zum Aufheben des Spiels getragen wird, zwischen zwei Armen einer Gabel (78) angeordnet ist, die durch den verschiebbaren Teil getragen wird, und dessen freies Ende dem Druck einer Druckfeder (81) ausgesetzt ist, die in einer Bohrung (82) des verschiebbaren Teils untergebracht ist.

13. Messapparat nach Anspruch 10, dadurch gekennzeichnet, dass der Hebel (800), der durch die zweite Achse (56) der Einrichtung zum Aufheben des Spiels getragen wird, ausserhalb des verschiebbaren Teils (4) ist und durch eine Verlängerung (85) der zweiten Achse (560) getragen wird, und dass das freie Ende dieses Hebels einem Zug einer Zugfeder (810) ausgesetzt ist, die an einem Bolzen (86) angreift, der am verschiebbaren Teil befestigt ist.

## Claims

1. An apparatus for measuring linear values comprising a frame (1), a guide slideway (2) rigidly fastened to the frame (1) and oriented parallel to one direction of measurement, a slide (4) having means for sliding along the slideway (2), a measurement head (5) with tracing probe associated with the slide (4), a device for detecting the position of the tracing probe along the guide slideway, at least one movement generator (19) with a transmission (13, 15-18) for displacing the slide (4) along the slideway (2), a housing (63) and a protective device for protecting at least the measurement head (5) from impacts and from the stresses caused by the actuation of the movement generator (19) and by its transmission, characterized in that it comprises a drive plate (7) connected to the movement transmission (13, 15-18), guide means (8, 9) independent of the slideway (2) for stabilizing the drive plate with respect to it, balancing and damping connecting means (10, 11, 12) between the drive plate and slide (4), and a girder (3) independent of the slide and fastened rigidly to the frame (1) in order, by itself or together with the latter, to support the housing (63), the generator (19) and the movement transmission (13, 15-18).

2. Apparatus according to claim 1, characterized in that the drive plate (7) of the slide (4) is superimposed on the latter.

3. Apparatus according to claim 1, characterized in that the guide means of the drive plate (7) are formed by three rollers (8) borne by said plate and engaged with play in three sections of U-shaped rails (9) fastened to the slide.

4. Apparatus according to claim 1, characterized in that the connecting means between the drive plate (7) and the slide (4) are formed of a first traction spring (10) for balancing the weight of the slide (4) itself and of two second traction springs (11, 12) parallel to each other and in operational opposition, used as dampers and as generators of a measurement pressure in both directions of displacement of the slide.

5. Apparatus according to claim 1, characterized in that the movement transmission is formed by a cable (13) guided in a closed circuit by return pulleys (15-18) borne by the girder (3) and the frame (1), fastened to the drive plate (7), including in its circuit a balancing counterweight (14) of suspended masses, and moved by friction of a drive pulley (15) fastened on an output shaft (28) of a movement generator (19) fastened to the frame (1).

6. Apparatus according to claim 5, characterized in that the circuit of the cable (13) is doubled by a flexible protective belt (44) passing in front of the drive plate (7), the slide (4) and the slideway (2), the guide pulleys (15-18) having for this purpose two steps, the one of smaller diameter driving and guiding the cable (13) and the other driving and guiding the flexible belt (44).

7. Apparatus according to claim 1, characterized in that the relative displacement between the drive plate (7) and the slide (4) is limited by two double-acting stop devices, working in opposition to function in both directions of displacement of the slide and each formed of a bracket (41) fastened to one of the two elements, slide or drive plate, and by a stop (42) with coaxial compression spring (43) fastened to the other element and placed below the bracket.

8. Apparatus according to claims 5 and 7, characterized in that the holding by friction of the cable (13) on the drive pulley (15) is adapted to yield in the case of an excess displacement of the slide (4) limited by the two double-acting stop devices (41, 42, 43).

9. Apparatus according to claim 1, characterized in that the frame (1) comprises an integrated counter bearing plate (100) which is connected to it in three spaced regions (68) forming a triangular support polygon by three bearing connection devices which are adjustable in height with controlled and constant prestress (69-74) for the take-up of play.

10. Apparatus according to claim 1, characterized in that the slide (4) is mounted for movement by translation along the slideway by means of pairs of rollers (6) which, by each pair, clamp two opposite parallel guide faces of said slideway, and in that it comprises, for each of these pairs of rollers, a play take-up device comprising a first roller mounted for rotation on a first shaft (54, 540) rigidly fastened to the slide (4), a second roller mounted for rotation on an eccentric end (55, 550) of a second shaft (56, 560), itself mounted for rotation in the slide, a tongue (80, 800) fastened to said second shaft and the free end of which is subjected to the action of a spring (81, 810) in such a manner that a pressure force on the slideway (2) is transmitted to the roller mounted rotatably on this second shaft.

11. Apparatus according to claim 10, characterized in that the play take-up device comprises an adjustable spring stop (83) the axis of which is perpendicular to the face of the slideway (2) against which the roller rotatably mounted on the second shaft (56, 560) is elastically pressed.

12. Apparatus according to claim 10, characterized in that the tongue (80) borne by the second shaft (56) of the play take-up device is located between the two arms of a fork (78) borne by the slide (4) and is subjected at its free end to the thrust of a compression spring (81) housed in a debouching hole (82) in the slide.

13. Apparatus according to claim 10, characterized in that the tongue (800) borne by the second shaft (560) of the play take-up device is outside the slide (4) and is borne by an extension (85) of the second shaft (560), and in that the free end of said tongue is subjected to the traction of a traction spring (810) attached to a pivot (86) fastened to the slide.
